# EUROPEAN PATENT APPLICATION

(11) **EP 2 395 340 A1**
(43) Date of publication of application: **14.12.2011**
(21) Application number: 11158765.5
(22) Date of filing: 18.03.2011
(51) Int. Cl.: G01N 3/12

(54) **Method and apparatus of testing cartridges for liquid medicament**

(71) Applicant: Sanofi-Aventis Deutschland GmbH, 65929 Frankfurt (DE)
(72) Inventor: The designation of the inventor has not yet been filed

(57) **Abstract**

The present invention relates a method and to an apparatus of testing a cartridge to be filled with a medicament. The cartridge (10) comprises a vitreous body (12) and a piston (14) slidably displaced therein at least towards a distal direction (24) and the method for testing structural integrity of the cartridge comprises the steps of:
- at least partially filling the vitreous body (12) with a pressure transmitting substance (22),
- applying a pre-defined pressure (18) to the substance (22) by displacing the piston (14) relative to the vitreous body (12) in distal direction (24) until at least one pre-defined condition is met, and
- monitoring the pressure (18) applied to the piston (14).

## Description

### Field of the Invention

The present invention relates to the field of testing cartridges, such like carpules, vials or ampoules that are to be filled with a liquid medicament. In particular, the invention relates to detection or determination of the structural integrity of glass cartridges via destructive burst trials.

### Background and Prior Art

Liquid medicaments, such like insulin, heparin, requiring administering by way of injection, are typically provided in cartridges, such like carpules, vials or ampoules. With regard to the type of medicament, the material of the cartridge or container has to be inert. Therefore, cartridges made of glass are typically used for storing and distributing medicaments or vaccines.

However, glass cartridges comprising a vitreous body of e.g. cylindrical geometry may become subject to fracture if not handled appropriately. In the event of undue care, glass cartridges may break. Even though in industrial filling and packaging processes, glass cartridges or vitreous bodies are generally handled with due care, occasional breakage of particular cartridges may not be entirely prevented. In case a glass cartridge is damaged, respective glass splinters may distribute and the medicament contained in the cartridge may contaminate the environment, in particular neighbouring cartridges. In the event, a single glass cartridge is damaged in an industrial manufacturing line, it may become necessary that an entire charge of cartridges has to be 100% visually inspected at high cost as a precaution.

Macroscopic glass breakage may occur due to a singular or due to repeated impact with a particular force or due to repeated and accumulated enlargement of macroscopic defects, the latter of which are not easily detectable. In typical production processes, a particular glass cartridge may be exposed to a series of low sized mechanical impacts. Any of these impacts alone does not yet lead to a macroscopic glass breakage. But accumulation of successive impact events may constantly lower the cartridge's integrity. This accumulation of mechanical microcracks or mechanical impact can be denoted as glass memory effect.

There exist various methods of testing or determining the glass integrity during or prior to a mass-production process. Typically, the integrity of a vitreous body can be measured with a selection of tools by applying mechanical stress to the glass body from outside with a well-defined force until the glass body breaks or bursts. However, such burst experiments are difficult to control and may not provide sufficiently reproducible results.

### Objects of the Invention

It is therefore an object of the present invention to provide an improved method to determine the mechanical integrity of vitreous bodies, in particular of glass cartridges for a mass-production process. The method should provide improved reproducibility of parameters allowing to characterize the mechanical integrity of glass cartridges. It is a further aim, to improve the accuracy and reproducibility of mechanical stress and impact to be applied to a series of cartridges.

### Summary of the Invention

The invention relates to a method of testing a cartridge to be filled with a medicament, moreover to a method of determining the structural integrity of glass cartridges, preferably by way of destructive burst trials.

The cartridge comprises a vitreous body, typically a cylindrical barrel made of glass and further comprises a piston, such like a rubber stopper slidably displaced in the vitreous body at least towards a distal direction. Typically, the cartridge is equipped with a piston slidably displaced therein. This way, by applying trust or distally directed pressure to the piston, the piston tends to move in distal direction, thereby establishing a respective pressure inside the vitreous body that serves to expel a pre-defined amount of the liquid medicament from the cartridge via a distally located end section. The distal end of such cartridges is typically sealed with a flexible and penetrable seal, such like a septum intended to be penetrated by a piercing element, e.g. by an injection needle, which in turn provides access to the inner volume of the cartridge.

The method of testing the cartridge or of determining its integrity comprises in a first step to at least partially fill the vitreous body with a pressure transmitting substance and to seal the vitreous body appropriately. After the substance has been filled into the vitreous body, a pre-defined pressure is applied to the substance by displacing the piston relative to the vitreous body in distal direction until at least one pre-defined condition is met. Additionally, the pressure applied to the piston is monitored in order to obtain information about the structural integrity of the vitreous body.

By applying distally directed pressure to the piston, a respective gas- or fluid pressure builds up inside the vitreous body. By way of displacing the piston, the applied pressure evenly and homogeneously distributes inside the cartridge and across the cartridge walls. Consequently, the inside facing walls of the vitreous body become homogeneously stressed. By applying a spatially homogeneously distributed pressure only to the inside facing wall sections of the vitreous body, a burst testing can be conducted in a reproducible and accurate way. Singular effects that may arise due to punctual application of pressure to the side wall of the vitreous body from the outside can be effectively circumvented.

According to a preferred embodiment, the pre-defined condition is fulfilled when the vitreous body is at least partially subject to breakage or when the piston has been displaced a pre-defined distance or for a pre-defined time interval. Generally, pressure application to the piston stops as soon as the vitreous body breaks or bursts. Otherwise, it the vitreous body or cartridge under examination withstands a maximum applied pressure, the pressure application will be stopped either when the piston has moved a pre-defined distance or when a particular and pre-defined pressure level has been applied to the pressure transmitting substance for a predefined time interval.

In case the cartridge or its vitreous body does not show any structural defects, its structural integrity can be assumed. Otherwise, if a vitreous body comprises minor or major non-visible defects, application of pressure and mechanical stress via the piston and the pressure transmitting substance may immediately lead to a visible and detectable disintegration or breakage of the vitreous body.

In a further preferred aspect, the vitreous body is not only partially but substantially entirely filled with a liquid or with a gaseous substance prior to a displacement of the piston. Depending on the type of substance filled into the vitreous body, distal and proximal end sections of the vitreous body have to be sealed appropriately, such that application of distally directed pressure to the piston indeed leads to a respective pressure build up of the pressure transmitting substance.

In a further preferred embodiment, the pressure applied to the piston and/or to the pressure transmitting substance is measured and/or monitored versus a distally directed displacement of the piston. This way, pressure-distance diagrams can be recorded and monitored. The general slope of a pressure-distance curve may serve as an indicator regarding mechanical integrity and/or stability of the vitreous body. Moreover, any leakage or broken seal of the cartridge can be detected.

Additionally or alternatively, the pressure applied to the piston and/or to the pressure transmitting substance is measured and/or monitored versus time. By recording a pressure-time diagram, additional or alternative parameters allowing to determine structural integrity of the vitreous body can be derived.

In still another and preferred embodiment, the pressure applied to the piston and/or to the pressure transmitting substance is constantly increased until the pre-defined condition is met. Applied pressure may be monotonously and successively increased, either stepwise or continuously.

In case of a burst or breakage of the cartridge, maximum pressure or maximum force applied to the piston is recorded. When recording or monitoring a pressure-distance or a pressure-time diagram, maximum pressure to be applied can be identified as a peak in a respective pressure-distance or pressure-time graph.

According to a further preferred embodiment, the entire procedure of pressure application and a respective distally directed displacement of the piston as well as a final and eventual breakage of the vitreous body is visually recorded by means of at least one camera. In particular, high speed cameras are preferably applied providing frame rates in the range of several hundred or even thousand and more frames per second.

In another aspect, the invention refers to an apparatus for testing the mechanical stability and/or the mechanical integrity of a cartridge, which is already filled or which is to be filled with a liquid medicament. The cartridge typically has a vitreous body and a piston moveably arranged therein. The apparatus for testing the cartridge and/or its vitreous body comprises a mount to releasably fasten a cartridge at least partially filled with a pressure transmitting substance. Additionally, the apparatus comprises at least one pressure ram adapted to apply a pre-defined pressure to the piston relative to the vitreous body.

This way, a respective pressure can be transmitted to the substance until a pre-defined condition is met. Moreover, the apparatus comprises at least one control means adapted to indicate if the pre-defined condition is met or fulfilled. The control means is able to record parameters allowing to determine the mechanical stability and/or integrity of the cartridge.

In a preferred embodiment, the apparatus further comprises a counter-pressure member which is adapted to seal a distal end of the cartridge. In case the cartridge at its distal end opposite the proximally located piston is not yet sealed, e.g. with a septum, or in case the septum is not sufficiently pressure resistant, by way of the counter pressure member, eventual leakage of the cartridge can be effectively prevented. Moreover, when the counter pressure member itself is provided with a sealing material, e.g. with a layer of rubber or the like, even vitreous bodies not yet supplied with a distally located seal can be sufficiently tested.

In a further preferred embodiment, the control means of the apparatus comprises at least one sensor arrangement to monitor the pressure applied to the piston and/or to monitor the distance, the piston moves under application of said pressure. By means of this sensor arrangement, pressure versus distance diagrams can be recorded and monitored.

Additionally, the sensor arrangement may be adapted to record and to monitor also a pressure versus time diagram which may be additionally used for structural integrity determination of the vitreous body.

It is of further benefit, and according to another preferred embodiment, when the apparatus comprises a control unit adapted to control a movement of the pressure ram according to a pre-defined function of applied pressure versus distance and/or versus time. This way, reproducible conditions for all cartridges to be tested by said apparatus can be provided. Therefore, the control unit may provide a kind of control loop and may individually control the motion and pressure to be applied by the pressure ram depending on measured parameters, such like applied pressure and/or distance, the piston has already moved.

Additionally and according to another preferred aspect, the apparatus comprises recording means adapted to record and/or to analyze measurement values generated by the at least one sensor arrangement. Typically, recorded parameters are stored either on some kind of mass storage medium or they may be prepared for visually indicating mechanical integrity or stability of the examined vitreous body.

It will be further apparent to those skilled in the pertinent art that various modifications and variations can be made to the present invention without departing from the spirit and scope of the invention. Further, it is to be noted, that any reference signs used in the appended claims are not to be construed as limiting the scope of the present invention.

### Brief Description of the Drawings

In the following, preferred embodiments of the invention will be described in greater detail be making reference to the drawings in which:
- Figure 1: schematically illustrates the apparatus for testing a cartridge in a perspective view,
- Figure 2: is illustrative of a typical cartridge of cylindrical geometry,
- Figure 3: schematically depicts the moment, a glass cartridge is subject to fracture, and
- Figure 4: shows a series of recorded pressure versus distance diagrams.

### Detailed Description

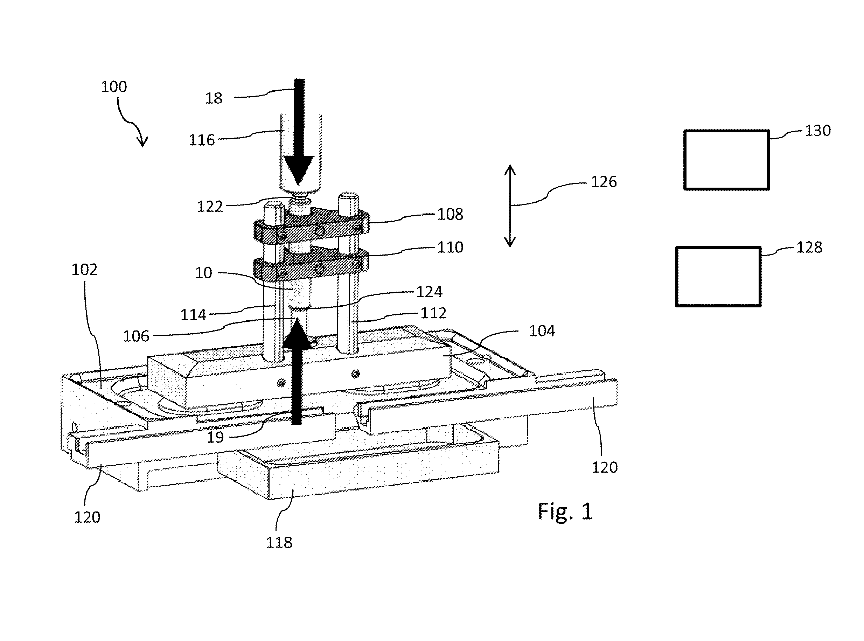

The testing apparatus 100 as illustrated in Figure 1 comprises a base 102 on which a pressure plate 104 is mounted. On the pressure plate 104 there are provided two substantially vertically oriented fixing rods 112, 114 that serve to keep two fixing elements 108, 110 in a pre-determined position above the level of the pressure plate 104. The pressure plate 104 further comprises a counter pressure pin 106 onto which a cartridge 10 can be placed in a well-defined way. The fixing elements 108, 108 having a plate-shaped geometry comprise a through opening defining a mount for the cartridge 10 to be inserted there through. By way of the plate-like fixing elements 108, 110, the cartridge 10 is fixed in an upright and well-defined position.

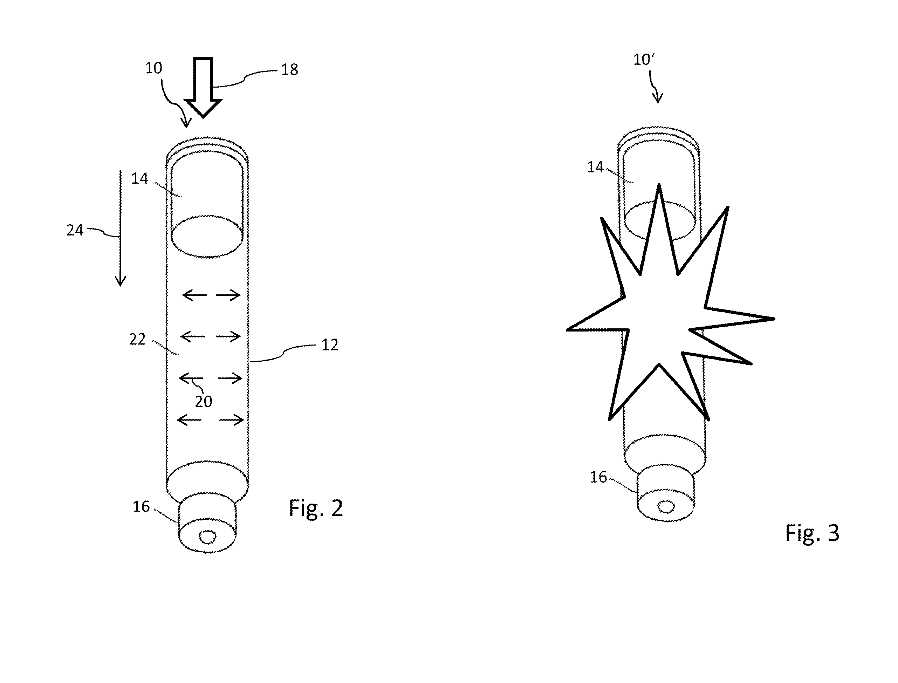

A distal end of the cartridge 10, typically provided with a seal 16 as depicted in Figure 2, is received by the lower counter-pressure pin 106 whereas the proximal end of the cartridge 10 points upward in the sketch of Figure 1. Further, by way of an upper pressure pin 116, distally and downwardly directed pressure 18 can be applied to the piston 14 of the cartridge 10. This way, a fluid pressure inside the cartridge may build up. Moreover, also a counter pressure 19 can be applied in proximal direction. Then not only the distally located ram but also the counter-pressure pin 106 may actively apply proximally directed pressure to the cartridge, in particular to its distally located end 16.

As illustrated in Figure 2, the cartridge 10 is entirely filled with a liquid substance 22. Said substance can be a testing substance, like water or air. Alternatively, the destructive burst tests may be conducted with cartridges 10 being already filled with the medicament. Application of pressure 18 to the piston 14 in a distal direction 24 leads to a homogeneous and evenly distributed pressure built up in the substance 22 and inside the inner volume of the cartridge 10. As indicated by the radially outwardly pointing arrows 20, the pressure 18 inside the cartridge transmits into a radially outwardly directed pressure 20. The pressure transmitting substance 22 therefore serves to evenly and homogeneously distribute a distally directed pressure 18 or force effect applied to the cartridge 10 in all dimensions, radially and axially.

As soon as the pressure 18 applied to the piston 14 exceeds a pre-defined threshold, the vitreous body 12 may burst or may become subject to breakage as illustrated in the sketch of Figure 3 showing a cartridge 10' in the moment, the vitreous body 12 is subject to fracture.

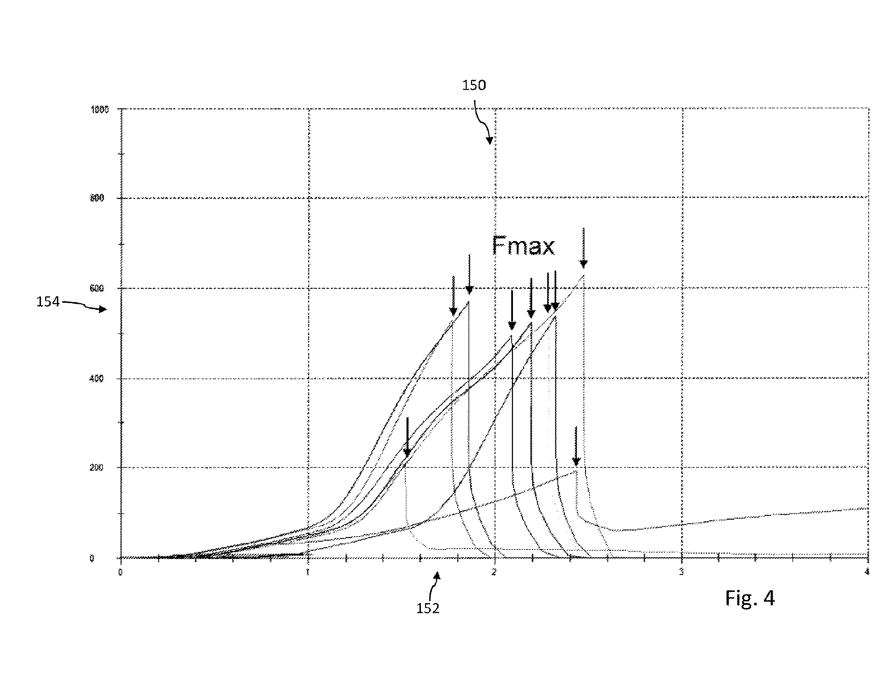

During the application of pressure to the piston 14, pressure versus distance diagrams 150 can be recorded as shown in Figure 4. There, an applied pressure or force effect 154 is illustrated vertically and the distance 152, a piston 14 moves is recorded horizontally. From the slope of the various graphs 150, an eventual leakage of the cartridge as well as a critical pressure at which the vitreous body becomes subject to fracture can be monitored and identified. Breakage of the cartridge can be identified as a peak in the various graphs 150 indicated by downwardly pointing arrows.

As further indicated in Figure 1, the apparatus comprises a tray 18 for collecting splinters and residues of broken glass cartridges 10'. Additionally, the apparatus 100 is equipped with some kind of rail or guiding structure 120 adapted to receive a protective housing, preferably a transparent shielding structure in order to protect the environment and staff that are present in the vicinity of the apparatus 100.

In Figure 1, there is further indicated a camera 128 for visually recording the burst tests and for recording the event of glass breakage. Moreover, the pressure ram 116 is equipped with a pressure sensor 122. Alternatively or additionally, also the lower pressure pin 106 can be provided with a pressure sensor 124. Additionally, a displacement sensor 126 indicated by a double-tipped arrow can be provided that serves to monitor a distally and/or proximally directed displacement of the movable pressure ram 116 or which records a respective movement of the piston 14. Since the piston 14 itself is made of an elastic material, the distance sensor 126 may provide touchless, in particular all-optical recording and monitoring of an inside facing and distally located end face of the piston 14 which is in contact with the pressure transmitting substance 22. This way, any displacement of the pressure pin 116 as well as an elastic compression of the piston 14 can be identified and determined.

Finally, the apparatus 100 comprises a control unit 130 connected with the sensors 122, 124, 126 and eventually even with the camera 128. The control unit 130 may control displacement and pressure application of the pressure ram 116 in order to displace a pressure ram 116 in a well-defined and pre-defined way.

### List of Reference Numerals

- 10: cartridge
- 12: vitreous body
- 14: piston
- 16: seal
- 18: axial pressure
- 20: radial pressure
- 22: substance
- 24: distal direction
- 100: testing apparatus
- 102: base
- 104: pressure plate
- 106: counter-pressure pin
- 108: fixing element
- 110: fixing element
- 112: fixing rod
- 114: fixing rod
- 116: pressure pin
- 118: collecting tray
- 120: rail
- 122: pressure sensor
- 124: pressure sensor
- 126: displacement sensor
- 128: camera
- 130: control unit
- 150: diagram
- 152: distance
- 154: applied pressure

## Claims

1. A method of testing a cartridge to be filled with a medicament, wherein the cartridge (10) comprises a vitreous body (12) and a piston (14) slidably displaced therein at least towards a distal direction (24), the method comprises the steps of:
- at least partially filling the vitreous body (12) with a pressure transmitting substance (22),
- applying a pre-defined pressure (18) to the substance (22) by displacing the piston (14) relative to the vitreous body (12) in distal direction (24) until at least one pre-defined condition is met, and
- monitoring the pressure (18) applied to the piston (14).

2. The method according to claim 1, wherein the pre-defined condition is fulfilled when the vitreous body (12) is at least partially subject to breakage or when the piston (18) has been displaced a pre-defined distance or for a pre-defined time interval.

3. The method according to claim 1 or 2, wherein the cartridge (10) or its vitreous body (12) is substantially entirely filled with a liquid or gaseous substance (22) prior to a displacement of the piston (14).

4. The method according to any one of the preceding claims, wherein the applied pressure (18) is measured and/or monitored versus a distally directed displacement of the piston (14).

5. The method according to any one of the preceding claims, wherein the applied pressure (18) is measured and/or monitored versus time.

6. The method according to any one of the preceding claims, wherein the pressure (18) applied to the piston (14) is constantly increased until the pre-defined condition is met.

7. The method according to any one of the preceding claims, wherein the displacement of the piston (14) relative to the vitreous body (12) and an eventual breakage of the body (12) are visually recorded by means of at least one camera (128).

8. An apparatus for testing the mechanical stability and/or mechanical integrity of a cartridge (10) to be filled with a medicament having a vitreous body (12) and a piston (14) movably arranged therein, wherein the apparatus comprises:
- a mount (106, 108, 110, 112, 114) to releasably fasten a cartridge (10) at least partially filled with a pressure transmitting substance (22),
- at least one pressure ram (116) adapted to apply a pre-defined pressure to the piston (14) relative to the vitreous body (12) for transmitting a respective pressure to the substance (22) until a pre-defined condition is met, and
- at least one control means (122, 124, 126, 128) adapted to indicate if the pre-defined condition is met.

9. The apparatus according to claim 8, further comprising a counter-pressure member (106) adapted to seal a distal end (16) of the cartridge (10).

10. The apparatus according to claim 8 or 9, wherein the control means comprise at least one sensor arrangement (122, 124, 126) to monitor the pressure (18) applied to the piston (14) and/or to monitor the distance the piston (14) moves under said pressure (18).

11. The apparatus according to any one of the preceding claim 8 to 10, further comprising a control unit (130) adapted to control a movement of the pressure ram (116) according to a pre-defined function of applied pressure (18) versus distance (152) and/or versus time.

12. The apparatus according to any one of the preceding claims 10 or 11, further comprising recording means (130) adapted to record and/or to analyze measurement values (152, 154) generated by the at least one sensor arrangement (122, 124, 126).
